# EUROPÄISCHE PATENTSCHRIFT

(11) **EP 4 124 551 B1**
(45) Veröffentlichungstag und Bekanntmachung des Hinweises auf die Patenterteilung: **16.10.2024**
(21) Anmeldenummer: 22184988.8
(22) Anmeldetag: 14.07.2022
(51) Int. Cl.: B62K 21/02, B62J 11/10, B62K 21/06

(54) **FAHRRADGABEL SOWIE FAHRRADGABEL-SYSTEM**
BICYCLE FORK AND BICYCLE FORK SYSTEM
FOURCHE DE VÉLO, AINSI QUE SYSTÈME DE FOURCHE DE VÉLO

(30) Priorität: 30.07.2021 DE 202021104078 U
(43) Veröffentlichungstag der Anmeldung: 01.02.2023
(73) Patentinhaber: Canyon Bicycles GmbH, 56073 Koblenz (DE)
(72) Erfinder: Conradt, Mario, 56072 Koblenz (DE); Hoertig, Noah, 56072 Koblenz (DE)
(74) Vertreter: dompatent von Kreisler Selting Werner - Partnerschaft von Patent- und Rechtsanwälten mbB

(56) Entgegenhaltungen:
- GB-A- 2 494 714
- NL-B1- 2 016 166
- US-A- 5 924 714
- US-A1- 2016 339 985
- US-A1- 2021 122 439

## Beschreibung

Die Erfindung betrifft eine Fahrradgabel sowie ein Fahrradgabel-System.

Bei modernen Fahrrädern sind Kabelzüge, Schaltzüge und dergleichen innerhalb des Rahmens angeordnet. So verlaufen beispielsweise Bremszüge, Schaltzüge und dergleichen vom Lenker, ggf. unmittelbar, in den Vorbau und sind sodann durch das Steuerrohr des Rahmens in das Oberrohr oder das Unterrohr des Rahmens geführt. Auch kann beispielsweise eine Hydraulikleitung für eine Vorderradbremse in den Gabelschaft und von diesem über die Gabelbrücke in das Gabelbein geführt sein. Auch ist es beispielsweise bekannt, Schaltzüge, Leitungen, Kabel und dergleichen unmittelbar von einem Schalthebel, Bremshebel oder dergleichen in den Lenker einzuführen und innerhalb des Lenkers in den Vorbau weiterzuführen. Insbesondere bei Rennrädern, aber auch anderen Fahrrädern mit einem eher schlanken Design, besteht die Problematik, dass die Außenabmessungen des Steuerrohr des Fahrradrahmens relativ gering sind und somit innerhalb des Steuerrohr nur wenig Platz vorhanden ist, um zusätzlich zum Gabelschaft und den beiden Lagern Schaltzüge, Hydraulikleitungen, Kabel und dergleichen anzuordnen.

Aus US 2021/122439 A1, US 2016-339985 A1, US 5 924 714 A, NL 2 016 166 B1 ist eine Fahrradgabel mit den Merkmalen des Oberbegriffs des Anspruchs 1 bekannt.

Aufgabe der Erfindung ist es, eine Fahrradgabel sowie ein Fahrradgabel-System zu schaffen, mit dem auch bei geringem Bauraum ein Anordnen von Schaltzügen, Kabel, Hydraulikleitung und dergleichen innerhalb des Steuerrohr möglich ist.

Die Lösung der Aufgabe erfolgt erfindungsgemäß durch eine Fahrradgabel mit den Merkmalen des Anspruchs 1, bzw. ein Fahrradgabel-System mit den Merkmalen des Anspruchs 13.

Die erfindungsgemäße Fahrradgabel weist zwei Gabelbeine auf, die über eine Gabelbrücke miteinander verbunden sind. Mit der Gabelbrücke ist ein Gabelschaft verbunden, der in montiertem Zustand innerhalb des Steuerrohr des Fahrradrahmens angeordnet ist. Erfindungsgemäß weist der Gabelschaft zumindest eine sich in Längsrichtung erstreckende Abflachung auf. Vorzugsweise weist der Gabelschaft somit in einem Teilbereich einen nicht runden Querschnitt auf. Bei einer Abflachung kann es sich, beispielsweise ausgehend von einem runden Querschnitt, um eine Sehne, bezogen auf einen Kreis, handeln. Bei einem innerhalb eines Steuerrohr mit rundem Innendurchmesser angeordneten Gabelschaft wird somit der Abflachung des Gabelschafts und der Innenseite des Steuerrohr vorhandene Hohlraum bzw. ein Kanal vergrößert. Innerhalb dieses vergrößerten Hohlraums können Schaltzüge, Kabel, Hydraulikleitungen und dergleichen angeordnet werden.

Besonders bevorzugt ist es, dass der Gabelschaft mehrere, insbesondere zwei Abflachungen aufweist, die sich in Längsrichtung erstrecken, wobei sich die mindestens eine Abflachung nicht über die gesamte Länge des Gabelschafts erstrecken muss. Relevant ist, dass die Abflachung in dem Bereich vorgesehen ist, in dem Hydraulikleitungen und dergleichen angeordnet werden sollen.

In einer besonders bevorzugten Ausgestaltung der Fahrradgabel ist eine Vorderseite des Gabelschafts konvex gekrümmt. Insbesondere ist die Vorderseite des Gabelschafts entsprechend eines Kreisbogens ausgebildet. Vorzugsweise weist der Gabelschaft somit einen in Fahrtrichtung weisenden vorderen Teil auf, der ringsegmentförmig ausgebildet ist. Dieser entsprechende vordere ringsegmentförmige Teil des Gabelschafts erstreckt sich vorzugsweise in Umfangsrichtung über einen Winkel von mindestens 90°. Vorzugsweise erstreckt sich der ringsegmentförmige Teil über einen Winkel von mindestens 120°, insbesondere mindestens 150°. Um zumindest eine, insbesondere zwei, ausreichend große Abflachungen an dem Gabelschaft realisieren zu können und somit ausreichend Raum zur Anordnung von Schaltzügen und dergleichen zu realisieren ist es des Weiteren bevorzugt, dass der ringsegmentförmige vordere Teil des Gabelschafts sich um einen Winkel von weniger als 270°, insbesondere weniger als 230° und besonders bevorzugt weniger als 200° erstreckt. In einer besonders bevorzugten Ausführungsform erstreckt sich der ringsegmentförmige Teil des Gabelschafts um 180° ±10°, insbesondere ±5°.

Eine entgegen der Fahrtrichtung in montiertem Zustand weisende Rückseite des Gabelschafts ist in besonders bevorzugter Ausführungsform ebenfalls konvex gekrümmt. Besonders bevorzugt ist es, dass die Rückseite des Gabelschafts der Vorderseite gegenüberliegend angeordnet ist und beide Seiten kreisbogenförmig ausgebildet sind und insbesondere denselben Kreismittelpunkt aufweisen. Sowohl die Vorderseite als auch die Rückseite sind somit auf demselben Kreisring angeordnet. Der Kreismittelpunkt liegt in bevorzugter Ausführungsform auf der Längsachse des Gabelschafts.

Besonders bevorzugt ist es, dass ein insbesondere die Rückseite ausbildendes hinteres Teil des Gabelschafts ringsegmentförmig ausgebildet ist. Sofern in bevorzugter Ausführungsform auch der vordere Teil des Gabelschafts ringsegmentförmig ausgebildet ist, ist es bevorzugt, dass der Winkelbereich des hinteren Teils kleiner ist als der Bereich des vorderen Teils. Unabhängig hiervon ist es bevorzugt, dass der hintere Teil einen Winkelbereich von mindestens 20°, insbesondere mindestens 30° und besonders bevorzugt mindestens 40° aufweist. Des Weiteren ist es zur Realisierung zumindest einer ausreichend großen Abflachung und somit eines großen Bauraums für Züge und dergleichen bevorzugt, dass sich der hintere ringsegmentförmige Teil um weniger als 120°, insbesondere weniger als 90° und besonders bevorzugt weniger als 70° erstreckt.

Vorzugsweise weist der Gabelschaft zwei Abflachungen auf. Diese sind in besonders bevorzugter Ausführungsform der Erfindung zwischen dem vorderen Teil und dem hinteren Teil des Gabelschafts angeordnet. Insbesondere ist der Gabelschaft zu einer durch die Längsachse des Gabelschafts verlaufenden Mittelebene spiegelsymmetrisch ausgebildet.

Die insbesondere zwei Abflachungen erstrecken sich ausgehend von einem oberen Ende des Gabelschafts in Richtung der Gabelbrücke. Hierdurch ist es insbesondere möglich, die erfindungsgemäße Fahrradgabel für unterschiedliche Fahrradrahmengrößen zu verwenden, da der Gabelschaft hierdurch zur Anpassung abgelängt werden kann. Hierdurch kann individuell, beispielsweise durch Vorsehen von unterschiedlichen Spacern auch eine Anpassung der Lenkerhöhe erfolgen. Die insbesondere zwei Abflachungen erstrecken sich in bevorzugter Ausführungsform ausgehend vom oberen Ende des Gabelschafts über mindestens 50%, insbesondere mindestens 75% der Gesamtlänge des Gabelschafts. In montiertem Zustand erstrecken sich die insbesondere zwei Abflachungen zumindest bis zu einem mittleren Bereich des Steuerrohr, insbesondere mindestens bis zu einem unteren Viertel des Steuerrohr.

Erfindungsgemäße weist der Gabelschaft einen der Gabelbrücke zugewandten Teil auf, der kreiszylindrisch ausgebildet ist. Dieser kreiszylindrisch ausgebildete Teil erstreckt sich vorzugsweise, ausgehend von der Gabelbrücke in Längsrichtung über mindestens 20mm, insbesondere über mindestens 45mm. Insbesondere ist der zylindrische Teil kürzer als 70mm, insbesondere kürzer als 50mm.

Zwischen dem zylindrischen Teil des Gabelschafts und dem die mindestens eine Abflachung aufweisenden Teil des Gabelschafts kann ein Übergangsbereich bzw. Übergangsteil vorgesehen sein, wobei ein unmittelbarer, ggf. stufenförmiger Übergang, möglich ist. Bevorzugt ist es, einen möglich sanften, insbesondere stufenfreien, Übergang zu realisieren.

Erfindungsgemäß ist eine Längsachse desjenigen Teils des Gabelschafts, in dem die insbesondere zwei Abflachungen vorgesehen sind, zu einer Längsachse des kreiszylindrischen Teils des Gabelschafts versetzt. Die beiden Längsachsen sind somit nicht koaxial, verlaufen aber vorzugsweise parallel zueinander. Vorzugsweise beträgt der Versatz der beiden Längsachsen 2mm-5mm, insbesondere 2mm-3mm. Bevorzugt ist es hierbei des Weiteren, dass die Längsachse desjenigen Teils des Gabelschafts, in dem die mindestens eine Abflachung vorgesehen ist, in Fahrtrichtung vor der Längsachse des zylindrischen Teils angeordnet ist. Des Weiteren ist es bevorzugt, dass der Außenumfang des zylindrischen Teils des Kabelschafts größer ist als derjenige, die Abflachung aufweisende Teil des Gabelschafts.

Das erfindungsgemäße Fahrradgabel-System weist eine Fahrradgabel, wie vorstehend beschrieben, auf, wobei die Fahrradgabel vorzugsweise, wie vorstehend beschrieben, vorteilhaft weitergebildet sein kann. Ferner weist das erfindungsgemäße Fahrradgabel-System eine mit einem oberen Bereich des Gabelschafts verbindbare Abdeckkappe auf. Die Abdeckkappe ist in montiertem Zustand vorzugsweise unmittelbar oberhalb des Steuerrohr des Fahrradrahmens angeordnet. Das obere Ende des Gabelschafts ragt in montiertem Zustand üblicherweise über die Abdeckkappe nach oben vor. In diesem Bereich ist der Gabelschaft mit dem Lenkervorbau verbunden, wobei ggf. zwischen der Abdeckkappe und dem Lenkervorbau Spacer angeordnet sein können.

Die Abdeckkappe weist in bevorzugter Ausführungsform eine zentrale Öffnung auf, bei der es sich insbesondere um eine Durchgangsöffnung handelt. Diese Öffnung, in der der Gabelschaft angeordnet ist, weist eine Innenkontur auf, die der Außenkontur des Gabelschafts im Bereich der insbesondere zwei Abflachungen entspricht. Hierdurch ist es einerseits möglich den Bereich zwischen der Außenseite des Gabelschafts und der Öffnung der Abdeckkappe auf einfache Weise abzudichten und andererseits ist die Position der Abdeckkappe auf dem Gabelschaft klar definiert. Insbesondere ist ein Verdrehen der Abdeckkappe auf dem Gabelschaft nicht möglich.

Vorzugsweise weist die Öffnung zumindest eine, insbesondere zwei Einbuchtungen auf. Die Einbuchtungen entsprechen den Abflachungen des Gabelschafts. Vorzugsweise ist im Bereich der mindestens einen Einbuchtung eine Durchführöffnung vorgesehen. Diese dient zum Hindurchführen der Kabelseilzüge, Hydraulikleitungen oder dergleichen. Sofern in bevorzugter Weiterbildung der Gabelschaft mehrere, insbesondere zwei Abflachungen aufweist, ist es bevorzugt, dass auch die Abdeckkappe eine entsprechende Anzahl von Durchführöffnungen aufweist.

In der mindestens einen Durchführöffnung ist vorzugsweise ein Dichtelement angeordnet, durch das die Leitungen oder dergleichen hindurchgeführt sind. Durch das Vorsehen eines Dichtelements je Durchführöffnung ist das Eindringen von Feuchtigkeit vermieden.

Des Weiteren ist es bevorzugt, dass die Abdeckkappe an einer Unterseite eine umlaufende, insbesondere ringförmige Dichtung aufweist. Hierdurch ist ein zuverlässiges Abdichten gegenüber einer Oberseite des Steuerrohr des Fahrradrahmens gewährleistet.

In besonders bevorzugter Ausführungsform weist die Abdeckkappe ein Halteelement auf. Dies dient zum Fixieren der Abdeckkappe am Gabelschaft. Vorzugsweise weist das Halteelement ein Klemmelement auf, das mittels eines Fixierelements, wie einer Schraube, klemmend gegen eine Außenseite des Gabelschafts in montiertem Zustand drückt. Die Möglichkeit des Fixierens der Abdecckappe am Gabelschaft hat hinsichtlich der Montage einen wesentlichen Vorteil. So ist es möglich, vor dem Fixieren der Abdeckkappe den Gabelschaft der Fahrradgabel im SteuerrohrSteuerrohr zusammen mit den Lagern des Steuerrohrs anzuordnen. Im nächsten Schritt werden die Lager üblicherweise vorgespannt.

Anschließend erfolgt ein Fixieren der Abdeckkappe. Dies hat den wesentlichen Vorteil, dass der mit einem Lenker verbundene Vorbau vom oberen Ende des Gabelschafts entfernt werden kann, ohne dass sich die Vorspannung der Lager ändert. Dies hat beispielsweise den erheblichen Vorteil, dass zum Transport des Fahrrads der Lenker einschließlich des Vorbaus vom Gabelschaft demontiert werden kann und für die spätere Montage keine Justage der Lager erfolgen muss.

Die erfindungsgemäße Fahrradgabel sowie das erfindungsgemäße Fahrradgabel-System weist insbesondere den Vorteil auf, dass diese für unterschiedliche Rahmen-Modellreihen genutzt werden können. Es handelt sich somit um eine Plattformlösung, da die Größe, insbesondere aufgrund der Möglichkeit des Ablängens des Gabelschafts angepasst werden kann. Durch das erfindungsgemäße Vorsehen von Abflachungen am Steuerrohr ist es des Weiteren möglich, Leitungen etc. innerhalb des Steuerrohr zu verlegen und gleichzeitig ein SteuerrohrSteuerrohr mit geringen Außenabmessungen zu realisieren. Insbesondere ist es durch das erfindungsgemäße Design möglich, Steuerlager mit relativ kleinen Innendurchmessern zu realisieren. So ist eine Verwendung eines oberen Steuerlagers von Steuerlagern mit einem Innendurchmesser von weniger als 40mm, ggf. sogar mit einem Innendurchmesser von 35mm ± 2mm möglich.

Aufgrund des bevorzugten Vorsehens von Dichtungen einerseits an der Unterseite der Abdeckkappe und andererseits in den Durchgangsöffnungen der Abdeckkappe ist eine gute Dichtigkeit realisiert. Hierdurch kann die Lebensdauer der Steuerlager deutlich verlängert werden.

Nachfolgend wird die Erfindung anhand einer bevorzugten Ausführungsform unter Bezugnahme auf die anliegenden Zeichnungen näher erläutert.

Es zeigen:
- Fig. 1: eine schematische perspektivische Ansicht einer Fahrradgabel,
- Fig. 2: eine schematische Draufsicht der in Figur 1 dargestellten Fahrradgabel,
- Fig. 3: eine schematische perspektivische Draufsicht einer Abdeckkappe,
- Fig. 4: eine schematische perspektivische Ansicht der in Figur 3 dargestellten Fahrradkappe von unten und
- Fig. 5: eine schematische Seitenansicht eines Steuerrohr eines Fahrradrahmens zusammen mit einem Vorbau in montiertem Zustand.

Eine Fahrradgabel weist zwei Gabelbeine 10 auf, die über eine Gabelbrücke 12 miteinander verbunden sind. Die Gabelbrücke 12 ist mit einem Gabelschaft 14 verbunden. Erfindungsgemäß weist der Gabelschaft 14 einen oberen Teil 16, einen unteren Teil 18 sowie ein Verbindungsteil 20 auf.

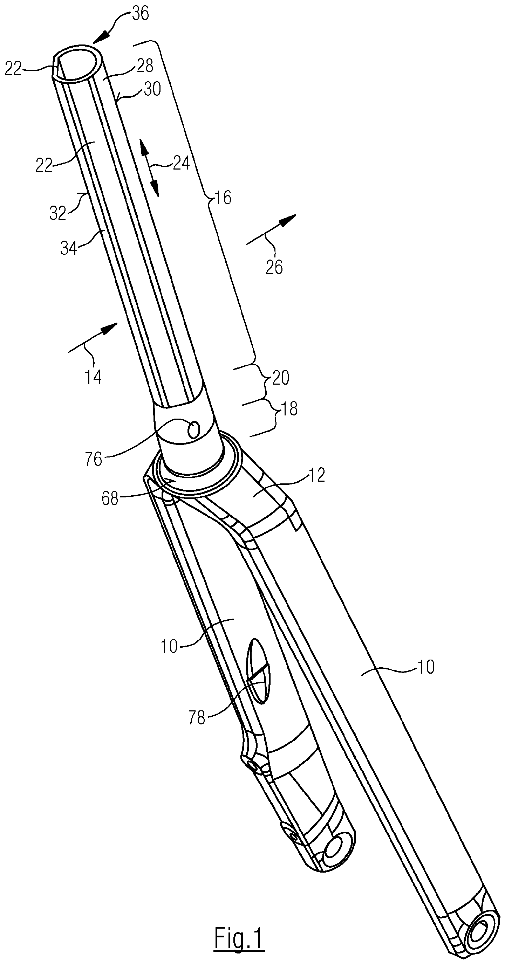

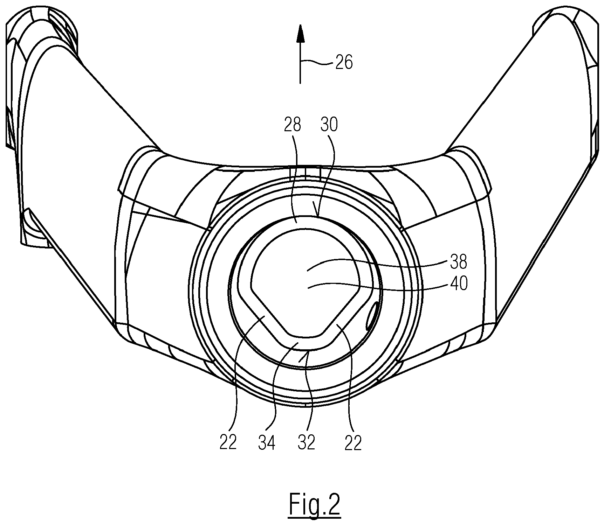

Der obere Teil 16 weist im dargestellten Ausführungsbeispiel im Querschnitt eine kreisrunde Grundform auf, wobei diese durch zwei Abflachungen einen nicht mehr runden Querschnitt aufweist. Die beiden Abflachungen 22, die sich in Längsrichtung 24 des Gabelschafts 14 erstrecken, weisen eine im Wesentlichen ebene Oberseite auf und sind entsprechend einer Sehne in einem kreisförmigen Querschnitt ausgebildet. In Fahrtrichtung 26 weist der obere Teil 16 des Gabelschafts 14 einen vorderen Teil 28 auf, dessen Vorderseite 30 konvex gekrümmt ausgebildet ist, wobei es sich im dargestellten Ausführungsbeispiel um eine kreisbogenförmige Vorderseite handelt. Das vordere Teil 28 ist, wie insbesondere in Figur 2 sichtbar, kreisringsegmentförmig ausgebildet. Ausgehend von der in Figur 1 linken Abflachung 22 im Uhrzeigersinn bis zur rechten Abflachung 22 überstreicht das Vorderteil 28 einen Winkel von ca. 180° ± 10°.

Der Vorderseite 30 gegenüberliegend weist der Gabelschaft eine Rückseite 32 auf, die ebenfalls konvex gekrümmt und im dargestellten Ausführungsbeispiel kreisbogenförmig ausgebildet ist. Die Vorderseite 30 sowie die Rückseite 32 weisen denselben Mittelpunkt auf, bzw. liegen auf derselben Kreislinie. Ein die Rückseite 32 ausbildender hinterer Teil 34 liegt dem vorderen Teil 28 gegenüber. Der hintere Teil 34 ist ebenfalls kreisringsegmentförmig ausgebildet und weist denselben Mittelpunkt wie das vordere kreisringförmige Segment 28 auf. Im dargestellten Ausführungsbeispiel erstreckt sich das hintere Teil 34, ausgehend von der in Figur 2 linken Abflachung gegen den Uhrzeigersinn zu der in Figur 2 rechten Abflachung um ca. 30° ± 10°.

Zwischen den beiden ringsegmentförmigen Teilen 28 und 34 sind die beiden Abflachungen 22 angeordnet, die im dargestellten Ausführungsbeispiel als ebene, gerade Wände ausgebildet sind, sodass das Steuerrohr 14 im oberen Bereich eine in Umfangsrichtung geschlossene Kontur aufweist.

Die im dargestellten Ausführungsbeispiel beiden Abflachungen 22 erstrecken sich ausgehend von einem oberen Ende 36 des Gabelschafts 14 über mindestens 2/3 der Länge des Gabelschafts 14 in Richtung der Gabelbrücke 12. An dem gabelbrückenseitigen Ende des Gabelschafts 12 ist das untere Teil 18 ausgebildet. Dies weist einen zylindrischen Querschnitt auf. Der Außendurchmesser des unteren Teils 18 ist hierbei größer als der Außendurchmesser des oberen Teils 16 des Gabelschafts 14. Das Zwischenteil 20 dient zur Verbindung des oberen Teils 16 und dem unteren Teil 18 und gleicht die unterschiedlichen Außenkonturen der beiden Teile 16, 18 aneinander an.

Das obere die Abflachungen aufweisende Teil 16 des Gabelschafts 14 ist zu dem zylindrischen Teil 18 nicht koaxial, sondern in Fahrtrichtung 26 versetzt angeordnet. Wie insbesondere aus Figur 2 ersichtlich ist eine Längsachse 38 des oberen Teils 16 des Gabelschafts gegenüber einer Längsachse 40 des unteren zylindrischen Teils 18 des Gabelschafts nach vorne in Fahrtrichtung 26 versetzt.

Auf den Längsachsen 38, 40 sind jeweils auch die Mittelpunkte der ringsegmentförmigen Elemente 28, 34 bzw. des zylindrischen unteren Teils 18 angeordnet.

Wie sich insbesondere aus Figur 2 ergibt, ist durch die Ausgestaltung des oberen Teils 16 des Gabelschafts im Bereich der Abflachungen 22 ein Hohlraum geschaffen, in dem Schaltzüge, Hydraulikleitungen, Kabel und dergleichen angeordnet werden können.

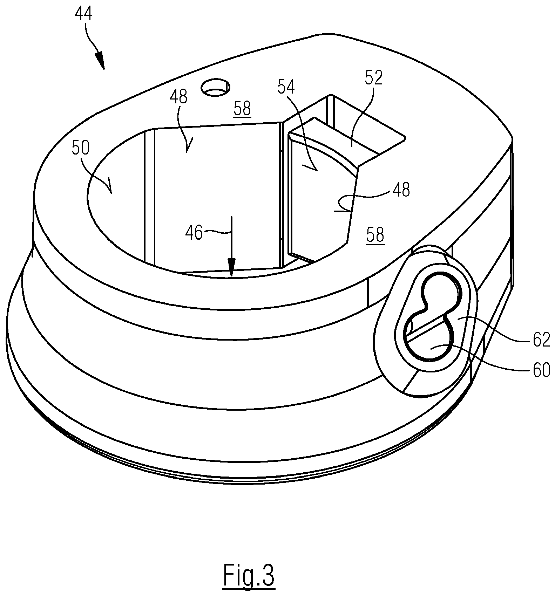

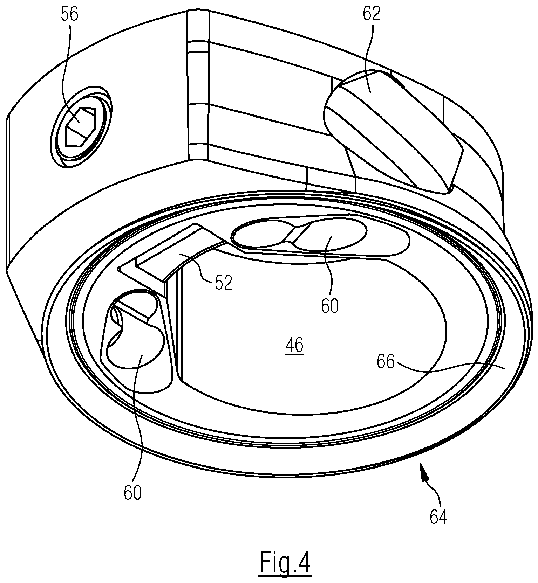

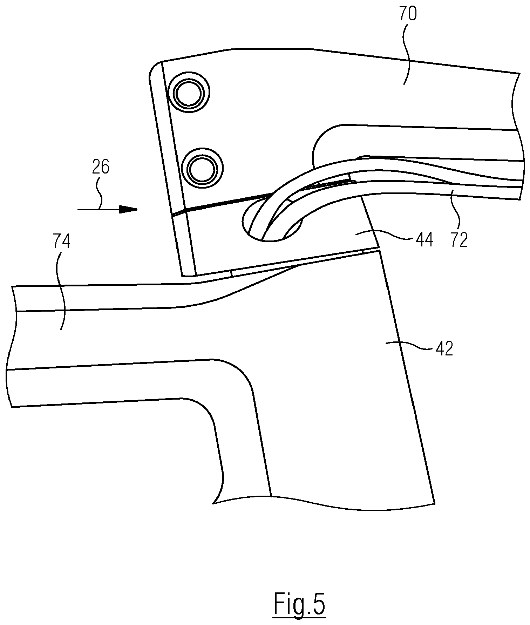

Je nach Größe des Fahrradrahmens und somit je nach Länge eines Steuerrohr 42 (Fig. 5) des Fahrradrahmens, in dem der Gabelschaft 14 angeordnet ist, steht ein oberes Ende des Gabelschafts 14 vor. Oberhalb des Steuerrohr 42 des Fahrradrahmens ist in montiertem Zustand eine Abdeckkappe 44 angeordnet. Die Abdeckkappe 44 ist im Detail in den Figuren 3 und 4 dargestellt. Die Abdeckkappe 44 weist eine als Durchgangsöffnung ausgebildete Öffnung 46 auf. In die Öffnung 46 ist in montiertem Zustand der obere Teil 16 des Gabelschafts 14 angeordnet. Eine Innenkontur der Öffnung 46 entspricht der Außenkontur des oberen Teils 16 des Gabelschafts 14. Insofern weist die Öffnung 46 zwei einander gegenüberliegende flache Seiten 48 auf. In montiertem Zustand sind die ebenen Seiten 48 parallel zu den Abflachungen 22. Ferner weist die Öffnung 46 einen kreissegmentförmigen Abschnitt 50 auf, der in montiertem Zustand parallel zu der Vorderseite 30 verläuft. Der Innenseite 50 der Öffnung 46 gegenüberliegend ist ein Klemmelement 52 angeordnet, dessen Innenseite 54 konkav gekrümmt ist. Die Innenseite 54 des Klemmelements 52 ist in montiertem Zustand gegen die Rückseite 32 gedrückt. Hierzu ist zur Ausbildung eines Halteelements das Klemmelement 52 mit einer Schraube 56 verbunden. Die im Gewinde eingreifende Schraube 56 dient dazu, das Klemmelement 54 zum klemmenden Fixieren an der Rückseite 32 des Gabelschafts zu verschieben.

Die Abdeckkappe 44 weist zur Ausbildung der ebenen Seitenwände 48, bezogen auf eine üblicherweise runde Öffnung, Einbuchtungen 58 auf. Insbesondere im Bereich dieser beiden Einbuchtungen 58 sind Durchführungsöffnungen 60 vorgesehen. Im dargestellten Ausführungsbeispiel dient jede Durchführungsöffnung 60 zum Hindurchführen von zwei Kabeln, Seilzügen, Hydraulikleitungen oder dergleichen. In den Durchführungsöffnungen 60 ist jeweils ein Dichtelement 62 angeordnet, um das Eindringen von Wasser oder Feuchtigkeit zu vermeiden.

Ferner ist an einer Unterseite 64 ein ringförmiges Dichtelement 66 angeordnet. Das Dichtelement 66 liegt in montiertem Zustand (Fig. 5) an einer Oberseite des Steuerrohr 42 an, sodass auch in diesem Bereich das Eindringen von Feuchtigkeit in den Steuerrohr 42 vermieden ist.

Zur Montage wird in das SteuerrohrSteuerrohr 42 (Fig. 5) des Fahrradrahmens von unten der Gabelschaft 14 eingeführt. Hierbei ist im Gabelschaft 14 ein unteres Lager angeordnet, das in montiertem Zustand auf einer ringförmigen Fläche 68 (Fig. 1) anliegt. Auch im oberen Bereich des Steuerrohr 42 ist, wie üblich, ein Lager angeordnet. Oberhalb des Lagers ist ein Kompressionsring angeordnet. Dieser ist derart ausgebildet, dass er bezogen auf eine Fahrtrichtung 26 rückwärtigen Seite verdickt ist. Hierdurch wird der Versatz zwischen dem oberen Teil 16 des Gabelschafts 14 und dem unteren Teil 18 des Gabelschafts 14 ausgeglichen, da die beiden Lager koaxial zueinander angeordnet sein müssen.

Im nächsten Schritt werden, beispielsweise über eine innerhalb des Gabelschafts angeordnete übliche Spanneinrichtung, die sich an der Oberseite des Gabelschafts abstützt, die Lager vorgespannt. Sobald die Lager vorgespannt sind, kann die Abdeckkappe 44 über das Halteelement 52, 56 fixiert werden, in dem es klemmend mit dem oberen Teil 16 des Gabelschafts 14 verbunden wird. Da die Lagervorspannung hierdurch beibehalten ist, kann ein Vorbau 70 (Fig. 5) beispielsweise zum Transport zusammen mit dem Lenker demontiert werden, ohne dass eine erneute Justage der Lager erfolgen muss.

Während der Montage können auf einfache Weise Kabel, Schaltzüge, Hydraulikleitungen und dergleichen montiert werden. Die Züge 72 werden hierzu durch die Durchgangsöffnungen 60 in der Abdeckkappe 44 geführt und verlaufen sodann entlang der Abflachungen 22 in Richtung der Gabelbrücke 12 nach unten. Je nachdem um welche Züge etc. es sich handelt, können diese sodann beispielsweise in ein Oberrohr 74 des Fahrradrahmens oder auch in ein nicht dargestelltes Unterrohr des Fahrradrahmens geführt werden, um beispielsweise zur Schaltung, zur Hinterradbremse oder dergleichen geführt zu werden. Eine Hydraulikleitung oder ein anderer Zug kann zur Verbindung bei einer Vorderradbremse entlang der in Figur 2 in Fahrtrichtung 26 rechten Abflachung 22 geführt und sodann durch eine im Übergangsteil 20 vorgesehene Öffnung 76 ins Innere des Gabelschafts 14 eingeführt werden. Von dort aus kann beispielsweise die Hydraulikleitung zu einer Hydraulikbremse weiter durch die Gabelbrücke 12 in ein Gabelbein 10 geführt werden. Durch eine Öffnung 78 im linken Gabelbein 10 wird die Hydraulikleitung sodann wieder heraus und zu der Hydraulikbremse geführt.

## Patentansprüche

1. Fahrradgabel mit
zwei über eine Gabelbrücke (12) miteinander verbundenen Gabelbeinen (10) und
einem mit der Gabelbrücke (12) verbundenen Gabelschaft (14),
wobei der Gabelschaft (14) zumindest eine sich in Längsrichtung (24) des Gabelschafts (14) erstreckende Abflachung (22) und einen der Gabelbrücke (12) zugewandten kreiszylindrischen unteren Teil (18) aufweist,
**dadurch gekennzeichnet, dass**
der kreiszylindrische Teil (18) zu einem die insbesondere zwei Abflachungen (22) aufweisenden oberen Teil (16) des Gabelschafts (14) versetzt angeordnet ist, insbesondere nicht koaxial ist.

2. Fahrradgabel nach Anspruch 1, **dadurch gekennzeichnet, dass** zwei sich in Längsrichtung (24) erstreckende Abflachungen (22) vorgesehen sind.

3. Fahrradgabel nach Anspruch 1 oder 2, **dadurch gekennzeichnet, dass** eine in Fahrtrichtung (26) weisende Vorderseite (30) des Gabelschafts (14) konvex gekrümmt ist, insbesondere kreisbogenförmig ausgebildet ist.

4. Fahrradgabel nach Anspruch 1 bis 3, **dadurch gekennzeichnet, dass** ein in Fahrtrichtung (26) weisender vorderer Teil (28) des Gabelschafts (14), insbesondere eines oberen Teils (16) des Gabelschafts (14) ringsegmentförmig ausgebildet ist, wobei sich vorzugsweise das ringsegmentförmig ausgebildete Teil (28) über mindestens 90°, insbesondere mindestens 120° und besonders bevorzugt mindestens 150° erstreckt.

5. Fahrradgabel nach Anspruch 4, **dadurch gekennzeichnet, dass** das ringsegmentförmige Teil 28 sich über weniger als 270°, insbesondere weniger als 230° und besonders bevorzugt weniger als 200° erstreckt.

6. Fahrradgabel nach Anspruch 1 bis 5, **dadurch gekennzeichnet, dass** eine entgegen einer Fahrtrichtung (26) weisende Rückseite (32) des Gabelschafts (14) konvex gekrümmt ist, insbesondere kreisbogenförmig ausgebildet ist, wobei vorzugsweise die Rückseite (32) der Vorderseite (30) gegenüberliegend angeordnet ist und beide Seiten (30, 32) denselben Kreismittelpunkt aufweisen.

7. Fahrradgabel nach Anspruch 1 bis 6, **dadurch gekennzeichnet, dass** ein entgegen der Fahrtrichtung (26) weisender hinterer Teil (34) des Gabelschafts (14) ringsegmentförmig ausgebildet ist, wobei sich der hintere Teil (34) vorzugsweise über mindestens 20°, insbesondere mindestens 30° und besonders bevorzugt mindestens 40° erstreckt.

8. Fahrradgabel nach Anspruch 7, **dadurch gekennzeichnet, dass** sich der hintere Teil (34) über weniger als 120°, insbesondere weniger als 90° und besonders bevorzugt weniger als 70° erstreckt.

9. Fahrradgabel nach Anspruch 1 bis 8, **dadurch gekennzeichnet, dass** die insbesondere zwei Abflachungen (22) zwischen einem vorderen Teil (28) und einem hinteren Teil (34) angeordnet sind, wobei die insbesondere zwei Abflachungen (22) ausgehend von einem oberen Ende (36) des Gabelschafts (14) sich in Richtung der Gabelbrücke (12) erstrecken, wobei vorzugsweise die insbesondere zwei Abflachungen (22) sich über mindestens 50%, vorzugsweise über mindestens 75% der Gesamtlänge des Gabelschafts (14) erstrecken.

10. Fahrradgabel nach Anspruch 1 bis 9, **dadurch gekennzeichnet, dass** sich der kreiszylindrische untere Teil (18) ausgehend vorzugsweise von der Gabelbrücke (12) über mindestens 20mm, insbesondere mindestens 45mm erstreckt und vorzugsweise kürzer ist als 70mm, insbesondere kürzer als 50mm.

11. Fahrradgabel nach einem der Ansprüche 1 bis 10, **dadurch gekennzeichnet, dass** der kreiszylindrische Teil (18) einen größeren Außenumfang aufweist als der die insbesondere zwei Abflachungen (22) aufweisende Teil (16) des Gabelschafts (14).

12. Fahrradgabel nach Anspruch 1 bis 11, **dadurch gekennzeichnet, dass** an einer Oberseite der Gabelbrücke (12) ein Lagersitz (68) für ein unteres Steuerlager vorgesehen ist.

13. Fahrradgabel-System mit
einer Fahrradgabel nach einem der Ansprüche 1 bis 12 und einer mit einem oberen Bereich des Gabelschafts (14) verbindbaren Abdeckkappe (44).

14. Fahrradgabel-System nach Anspruch 13, **dadurch gekennzeichnet, dass** die Abdeckkappe (44) eine zentrale Öffnung (46) aufweist, deren Kontur oder Außenkontur des Gabelschafts (14) im Bereich der insbesondere zwei Abflachungen entspricht, wobei die Öffnung (46) vorzugsweise im Bereich der insbesondere zwei Abflachungen (22) jeweils eine Einbuchtung (58) aufweist.

15. Fahrradgabel-System nach Anspruch 13 oder 14, **dadurch gekennzeichnet, dass** die Abdeckkappe (44) mindestens eine, insbesondere zwei Durchführöffnungen (60) für Kabel, Seilzüge, Hydraulikzüge, etc. aufweist, wobei die Durchführöffnung (60) vorzugsweise im Bereich der Einbuchtung (58) angeordnet ist.

16. Fahrradgabel-System nach Anspruch 15, **dadurch gekennzeichnet, dass** die Durchführöffnung (60) ein Dichtelement (62) aufweist.

17. Fahrradgabel-System nach Anspruch 13 bis 16, **dadurch gekennzeichnet, dass** an einer Unterseite (64) der Abdeckkappe (44) eine umlaufende, insbesondere ringförmige Dichtung (66) vorgesehen ist.

18. Fahrradgabel-System nach Anspruch 13 bis 17, **dadurch gekennzeichnet, dass** die Abdeckkappe (44) ein Halteelement (52, 56) zum Fixieren der Abdeckkappe (44) am Gabelschaft (14) aufweist, wobei das Halteelement ein Klemmelement (52) aufweist, das mittels eines Fixierelements (56) klemmend gegen eine Außenseite des Gabelschafts (14) in montiertem Zustand drückt.

## Claims

1. A bicycle fork comprising
two fork legs (10) connected with one another via a fork bridge (12), and
a steer tube (14) connected with a fork bridge (12),
wherein the steer tube (14) comprises at least one flattening (22) extending in the longitudinal direction (24) of the steer tube (14) and a circular cylindrical lower part (18) facing the fork bridge (12),
**characterized in that**
the circular cylindrical part (18) is arranged to be offset, in particular not coaxial, with respect to the upper part (16) of the steer tube (14) having the in particular two flattenings (22).

2. The bicycle fork according to claim 1, **characterized in that** two flattenings (22) are provided extending in the longitudinal direction (24).

3. The bicycle fork according to claim 1 or 2, **characterized in that** a front side (30) of the steer tube (14) directed in the traveling direction (26) is convexly curved, in particular formed in a circular arc shape.

4. The bicycle fork according to claims 1 to 3, **characterized in that** a front part (28) of the steer tube (14) directed in the traveling direction (26), in particular an upper part (16) of the steer tube (14) is formed in a ring segment shape, wherein, preferably, the ring segment-shaped part (28) extends over at least 90°, in particular at least 120° and, as is particularly preferred, at least 150°.

5. The bicycle fork according to claim 4, **characterized in that** the ring segment-shaped part (28) extends over an angle of less than 270°, in particular less than 230° and, as is particularly preferred, less than 200°.

6. The bicycle fork according to claims 1 to 5, **characterized in that** a rear side (32) of the steer tube (14) directed opposite to the traveling direction (26) is convexly curved, in particular formed in a circular arc shape, wherein, preferably, the rear side (32) is arranged opposite the front side (30) and both sides (30, 32) have the same circular center.

7. The bicycle fork according to claims 1 to 6, **characterized in that** a rear part (34) of the steer tube (14) directed opposite to the traveling direction (26) is formed in a ring segment shape, wherein, preferably, the rear part (34) extends over at least 20°, in particular at least 30° and, as is particularly preferred, at least 40°.

8. The bicycle fork according to claim 7, **characterized in that** the rear part (34) extends over an angle of less than 120°, in particular less than 90° and, as is particularly preferred, less than 70°.

9. The bicycle fork according to claims 1 to 8, **characterized in that** the in particular two flattenings (22) are arranged between the front part (28) and the rear part (34), wherein the in particular two flattenings (22) extend from an upper end (36) of the steer tube (14) towards the fork bridge (12), wherein, preferably, the in particular two flattenings (22) extend over at least 50%, preferably over at least 75% of the total length of the steer tube (14).

10. The bicycle fork according to claims 1 to 9, **characterized in that** the circular cylindrical lower part (18) extends preferably from the fork bridge (12) over at least 20 mm, in particular at least 45 mm, and is preferably shorter than 70 mm, in particular shorter than 50 mm.

11. The bicycle fork according to claims 1 to 10, **characterized in that** the circular cylindrical part (18) has a larger outer diameter than the upper part (16) of the steer tube (14) having the in particular two flattenings (22).

12. The bicycle fork according to claims 1 to 11, **characterized in that** a bearing seat (68) for a lower steering bearing is provided on an upper side of the fork bridge (12).

13. A bicycle fork system comprising
a bicycle fork according to any of claims 1 to 12, and
a cover cap (44) adapted to be connected with an upper region of the steer tube (14).

14. The bicycle fork system according to claim 13, **characterized in that** the cover cap (44) has a central opening (46), the contour of which corresponds to the outer contour of the steer tube (14) in the region of the in particular two flattenings, wherein, preferably, the opening (46) has a respective indentation (58) in the region of the in particular two flattenings (22).

15. The bicycle fork system according to claim 13 or 14, **characterized in that** the cover cap (44) comprises at least one, in particular two lead-through openings (60) for wires, cables, hydraulic lines etc., wherein the lead-through opening (60) is preferably arranged in the region of the indentation (58).

16. The bicycle fork system according to claim 15, **characterized in that** the lead-through opening (60) comprises a sealing element (62).

17. The bicycle fork system according to claims 13 to 16, **characterized in that** a circumferential, in particular annular seal (66) is provided on a lower side (64) of the cover cap (44).

18. The bicycle fork system according to claims 13 to 17, **characterized in that** the cover cap (44) comprises a holding element (52, 56) for fixing the cover cap (44) to the steer tube (14), wherein, in the mounted state, the holding element preferably comprises a clamping element (52) clampingly pressing against an outer side of the steer tube (14) using a fixing element (56).

## Revendications

1. Fourche de vélo comprenant
deux fourreaux de fourche (10) reliés l'un à l'autre par un té de fourche (12) et
un tube de fourche (14) relié au té de fourche (12),
le tube de fourche (14) comprenant au moins un méplat (22) s'étendant dans la direction longitudinale (24) du tube de fourche (14) et une partie inférieure cylindrique circulaire (18) orientée vers le té de fourche (12),
**caractérisée en ce que**
la partie cylindrique circulaire (18) est disposée de façon décalée, notamment pas coaxiale, par rapport à une partie supérieure (16) du tube de fourche (14), comprenant notamment les deux méplats (22).

2. Fourche de vélo selon la revendication 1, **caractérisée en ce que** deux méplats (22) s'étendant dans la direction longitudinale (24) sont prévus.

3. Fourche de vélo selon la revendication 1 ou 2, **caractérisée en ce qu'**une face avant (30) du tube de fourche (14), orientée dans le sens de la marche (26), est courbée de manière convexe et est notamment formée en arc de cercle.

4. Fourche de vélo selon la revendication 1 à 3, **caractérisée en ce qu'**une partie avant (28) du tube de fourche (14), notamment d'une partie supérieure (16) du tube de fourche (14), orientée dans le sens de la marche (26), est formée en segment d'anneau, la partie (28) formée en segment d'anneau s'étendant de préférence sur 90°, notamment sur au moins 120° et de manière particulièrement préférée sur au moins 150°.

5. Fourche de vélo selon la revendication 4, **caractérisée en ce que** la partie (28) en segment d'anneau s'étend sur moins que 270°, notamment moins que 230° et de manière particulièrement préférée sur moins que 200°.

6. Fourche de vélo selon la revendication 1 à 5, **caractérisée en ce qu'**une face arrière (32) du tube de fourche (14), orientée dans le sens opposé à un sens de la marche (26), est courbée de manière convexe et est notamment formée en arc de cercle, la face arrière (32) étant disposée de préférence à l'opposé de la face avant (30) et les deux faces (30, 32) ayant le même centre de cercle.

7. Fourche de vélo selon la revendication 1 à 6, **caractérisée en ce qu'**une partie arrière (34) du tube de fourche (14) orientée dans le sens opposé au sens de la marche (26) est formé en segment d'anneau, la partie arrière (34) s'étendant de préférence sur au moins 20°, notamment sur au moins 30° et de manière particulièrement préférée sur au moins 40°.

8. Fourche de vélo selon la revendication 7, **caractérisée en ce que** la partie arrière (34) s'étend sur moins que 120°, notamment moins que 90° et de manière particulièrement préférée moins que 70°.

9. Fourche de vélo selon la revendication 1 à 8, **caractérisée en ce que** les deux méplats (22) sont disposés entre une partie avant (28) et une partie arrière (34), les deux méplats (22) s'étendant à partir d'une extrémité supérieure (36) du tube de fourche (14) en direction du té de fourche (12), les deux méplats (22) s'étendant de préférence sur au moins 50%, de préférence sur au moins 75%, de la longueur totale du tube de fourche (14).

10. Fourche de vélo selon la revendication 1 à 9, **caractérisée en ce que** la partie inférieure (18) cylindrique circulaire s'étend de préférence à partir du té de fourche (12) sur au moins 20 mm, notamment sur au moins 45 mm, et est de préférence plus courte que 70 mm, notamment plus courte que 50 mm.

11. Fourche de vélo selon l'une des revendications 1 à 10, **caractérisée en ce que** la partie cylindrique circulaire (18) a une circonférence extérieure plus grande que la partie (16) du tube de fourche (14) comprenant lesdits notamment deux méplats (22).

12. Fourche de vélo selon la revendication 1 à 11, **caractérisée en ce qu'**un siège de palier (68) pour un palier de direction inférieur est prévu sur un côté supérieur du té de fourche (12).

13. Système de fourche de vélo avec une fourche de vélo selon l'une des revendications 1 à 12 et avec un capuchon de recouvrement (44) pouvant être reliée à une zone supérieure du tube de fourche (14).

14. Système de fourche de vélo selon la revendication 13, **caractérisé en ce que** le capuchon de recouvrement (44) comprend une ouverture centrale (46) dont le contour correspond au contour extérieur du tube de fourche (14) dans la zone des notamment deux méplats, l'ouverture (46) comportant, de préférence dans la zone des notamment deux méplats (22), une échancrure (58) respective pour chacun.

15. Système de fourche de vélo selon la revendication 13 ou 14, **caractérisé en ce que** le capuchon de recouvrement (44) comprend au moins une, notamment deux, ouvertures de passage (60) pour des câbles, des câbles de commande, des tirants hydrauliques, etc., l'ouverture de passage (60) étant de préférence disposée dans la zone de l'échancrure (58).

16. Système de fourche de vélo selon la revendication 15, **caractérisé en ce que** l'ouverture de passage (60) comporte un élément d'étanchéité (62).

17. Système de fourche de vélo selon la revendication 13 à 16, **caractérisé en ce qu'**un joint (66) périphérique, notamment en forme d'anneau, est prévu à un côté inférieur (64) du capuchon de recouvrement (44).

18. Système de fourche de vélo selon la revendications 13 à 17, **caractérisé en ce que** le capuchon de recouvrement (44) comprend un élément de fixation (52, 56) pour fixer le capuchon de recouvrement (44) au tube de fourche (14), l'élément de fixation comprenant un élément de serrage (52) qui, en l'état monté, appuie en serrant contre un côté extérieur du tube de fourche (14) au moyen d'un élément de fixation (56).
